# EUROPÄISCHE PATENTSCHRIFT

(11) **EP 2 226 542 B1**
(45) Veröffentlichungstag und Bekanntmachung des Hinweises auf die Patenterteilung: **13.04.2011**
(21) Anmeldenummer: 10155657.9
(22) Anmeldetag: 05.03.2010
(51) Int. Cl.: F16L 3/00, F16L 21/08, F16L 25/00

(54) **Verbindungsanordnung**
Connection assembly
Dispositif de raccordement

(30) Priorität: 06.03.2009 DE 102009013366
(43) Veröffentlichungstag der Anmeldung: 08.09.2010
(73) Patentinhaber: Genterczewsky, Jochen, 97999 Igersheim (DE)
(72) Erfinder: Rein, Wolfgang, 72820 Sonnenbühl (DE)
(74) Vertreter: Witte, Weller & Partner

(56) Entgegenhaltungen:
- EP-A1- 1 416 212
- EP-A2- 0 919 758
- FR-A3- 2 663 400

## Beschreibung

Die Erfindung betrifft eine Verbindungsanordnung zum endseitigen Verbinden zweier Profilrohre eines Fluidleitungssystems oder zum Anbringen eines Anschlussstücks an ein Profilrohr, mit einem ersten Profilrohr und mit einem zweiten Profilrohr, wobei das erste Profilrohr eine erste Außenseite und das zweite Profilrohr eine zweite Außenseite aufweist, wobei die erste Außenseite und die zweite Außenseite jeweils an beiden Längsrändern eine Befestigungsleiste aufweisen, und mit einer Klemmeinrichtung, die auf der ersten und/oder zweiten Außenseite anordbar und mit den Befestigungsleisten in Eingriff bringbar ist.

Eine Verbindungsanordnung der eingangs genannten Art ist aus EP 0 919 758 B1 bekannt.

Eine Verbindungsanordnung der eingangs genannten Art wird zum Aufbau eines Fluidleitungssystems verwendet, das aus einer Mehrzahl von Profilrohren gebildet ist. Durch die Profilrohre wird ein unter Druck stehendes Fluid, das gasförmig oder flüssig sein kann, geleitet. Ein Anwendungsfall eines solchen Fluidleitungssystems ist bspw. die Zuführung von Druckluft zu einer Mehrzahl von Arbeitsplätzen, bspw. in der Automobilindustrie oder in KFZ-Werkstätten.

Die gas- bzw. flüssigkeitsdichte Verbindung der Profilrohre untereinander wird durch eine Dichthülse gewährleistet, deren eines Ende in den Hohlraum des einen Profilrohrs und dessen anderes Ende in den Hohlraum des anderen Profilrohrs gesteckt wird. Um die beiden miteinander zu verbindenden Profilrohre auf Zug beanspruchbar axial aneinander zu halten, ist eine Klemmeinrichtung vorgesehen. In einem Fluidleitungssystem, das zur Führung von Gasen oder Flüssigkeiten dient, die unter sehr hohen Betriebsdrücken stehen, die 10 bar und mehr betragen können, wird auf die gegenseitige Verbindung der Profilrohre eine sehr hohe Zugkraft ausgeübt, so dass die Klemmeinrichtung entsprechend dazu ausgelegt sein muss, diesen hohen Zugkräften zu widerstehen.

Mit einer solchen Verbindungsanordnung zum endseitigen Verbinden zweier Profilrohre sollen die zwei Profilrohre zum einen in geradliniger Verlängerung zueinander verbunden werden können als auch in einer winkligen, bspw. rechtwinkligen Anordnung zueinander, wie es durch die baulichen Gegebenheiten zum Aufbau eines Fluidleitungssystems bspw. in einer Werkhalle vorgegeben ist. Des Weiteren soll die Klemmeinrichtung im Sinne eines modularen Aufbaus des Fluidleitungssystems in entsprechend abgewandelter Ausführungsform zum Anbringen von Anschlussstücken an die Profilrohre verwendbar sein.

Die aus dem eingangs genannten Dokument EP 0 919 758 B1 bekannte Verbindungsanordnung weist Profilrohre auf, deren Außenumfang durch jeweils vier Außenseiten gebildet ist. Jede Außenseite weist an ihren beiden Längsrändern eine Befestigungsleiste auf. Die Klemmeinrichtung dieser bekannten Verbindungsanordnung weist zwei Blöcke auf, die jeweils an einem ihrer Längsränder eine Greifleiste aufweisen. Die Greifleiste des einen Blocks steht dabei formschlüssig mit der einen Befestigungsleiste der Außenseite des ersten und/oder zweiten Profilrohrs in Eingriff, und die Greifleiste des anderen Blocks steht mit der anderen Befestigungsleiste derselben Außenseite des ersten und/oder zweiten Profilrohrs formschlüssig in Eingriff. Eine Verriegelungseinrichtung, die zumindest zwei Schrauben aufweist, wird durch den einen Block quer zur Längsrichtung der Profilrohre und parallel zur Außenseite, an denen die Blöcke befestigt sind, gesteckt und mit dem anderen Block verschraubt. Die Verriegelungseinrichtung bewirkt somit ein Zusammendrücken der beiden Blöcke gegeneinander, wodurch die beiden Blöcke an den Befestigungsleisten der ersten und zweiten Außenseite des ersten und/oder zweiten Profilrohrs angeklemmt werden.

Nachteilig an dieser bekannten Verbindungsanordnung ist zum einen, dass die Haltekraft der Klemmeinrichtung lediglich durch eine Flächenreibung zwischen den Greifleisten der beiden Blöcke und den Befestigungsleisten der Profilrohre bewirkt wird. Bei besonders hohen Drücken, die in den Profilrohren herrschen können, können diese Flächenreibungskräfte überwunden werden, wodurch die beiden Profilrohre sich voneinander lösen. Dieses Problem verstärkt sich insbesondere bei einer geradlinigen Verbindung zweier Profilrohre miteinander, bei der die beiden Blöcke die Trennebene zwischen den beiden Profilrohren überspannen. In diesem Fall werden die zwei Blöcke mit jeweils einer Verriegelungsvorrichtung in Form einer oder zweier Schrauben beidseits der Trennebene zwischen den beiden Profilrohren zusammengedrückt. Werden die Schrauben der Verriegelungseinrichtung beidseits der Trennebene jedoch unterschiedlich stark angezogen, kann es vorkommen, dass die beiden Blöcke mit unterschiedlicher Klemmkraft an das erste und an das zweite Profilrohr gedrückt werden. Die Folge kann sein, dass die Klemmeinrichtung die beiden Profilrohre nicht mit der bei den vorstehend genannten hohen Drücken erforderlichen Klemmkraft aneinander festhält.

Eine weitere Verbindungsvorrichtung der eingangs genannten Art ist aus GB 2 246 609 A bekannt. Bei dieser bekannten Verbindungsanordnung weist die Klemmeinrichtung eine Platte auf, die auf einer der Außenseiten des ersten und/oder zweiten Profilrohrs angeordnet wird. Die Platte wird mittels Nutsteinen in als Nuten ausgebildeten Befestigungsleisten der zugeordneten Außenseite des ersten und/oder zweiten Profilrohrs befestigt, indem Schrauben durch die Platte greifen und mit den Nutsteinen verschraubt werden. Die Schrauben wirken hier senkrecht zu der Außenseite, auf der die Platte angebracht ist. Auch hier besteht wiederum das Problem, dass die Klemmkraft ausschließlich durch eine Flächenreibung aufgebracht wird, und zwar die Flächenreibung zwischen der Platte und der Außenseite des ersten und/oder zweiten Profilrohrs und der Flächenreibung der Nutsteine gegen die Befestigungsleisten. Darüber hinaus ist bei dieser bekannten Verbindungsanordnung als nachteilig anzusehen, dass die Nutsteine bereits vor dem Zusammenfügen zweier Profilrohre in die Nuten eingeführt werden müssen. Das Einfädeln der Nutsteine in die Nuten der Befestigungsleisten bedeutet einen erhöhten Montageaufwand.

Schließlich ist eine weitere Verbindungsanordnung aus EP 1 416 212 bekannt. Bei dieser bekannten Verbindungsanordnung weist die Klemmeinrichtung einen Riegel, vier Klemmbacken und zumindest zwei Schrauben auf. Jeweils zwei Klemmbacken stehen mit dem Riegel und der jeweils zugeordneten Befestigungsleiste des ersten und/oder zweiten Profilrohrs in Eingriff. Eine Schraube greift durch eine der beiden Klemmbacken und den Riegel hindurch und ist mit der anderen Klemmbacke verschraubt. Der Riegel und die Klemmbacken weisen Anlaufschrägen auf, wodurch die beiden Klemmbacken beim Anziehen der Schraube geringfügig auf dem Riegel aufgleiten und mit ihren Greifleisten die Befestigungsleiste an dem ersten und/oder zweiten Profilrohr umgreifen. An den Klemmbacken können darüber hinaus ggf. Vorsprünge vorhanden sein, die in das Material des ersten und/oder zweiten Profilrohrs geringfügig eingreifen. Obwohl die Klemmkraft dieser Klemmeinrichtung den hohen Anforderungen der Verbindung von Profilrohren in einem Fluidsystem, in dem ein hoher Druck herrscht, genügt, kann an dieser bekannten Verbindungsanordnung als nachteilig angesehen werden, dass sie eine vergleichsweise hohe Anzahl an Einzelteilen benötigt, was den Herstellungs- und Montageaufwand dieser bekannten Verbindungsanordnung erhöht. Da durch den Riegel zwei Bohrungen über die gesamte Breite des Riegels hindurchgehen, stellen diese Bohrungen außerdem Materialschwächungen in dem Riegel dar, da die Wandstärke des Riegels im Bereich der Bohrungen deutlich reduziert ist.

Der Erfindung liegt die Aufgabe zugrunde, die vorstehend genannten Nachteile zu vermeiden und insbesondere eine Verbindungsanordnung der eingangs genannten Art bereitzustellen, die wenig Teile erfordert, leicht herzustellen und leicht zu montieren ist, und die den hohen Anforderungen an die Haltekraft genügt.

Erfindungsgemäß wird diese Aufgabe hinsichtlich der eingangs genannten Verbindungsanordnung dadurch gelöst, dass die Klemmeinrichtung einen einstückigen Riegel aufweist, der einen auf der ersten und/oder zweiten Außenseite anzuordnenden plattenförmigen Abschnitt und etwa senkrecht zu diesem an seiner einen Längsseite einen ersten Schenkel und an seiner gegenüberliegenden Längsseite einen zweiten Schenkel aufweist, dass zumindest der erste Schenkel mit seinem freien Ende die zugeordnete Befestigungsleiste umgreift, und dass die Klemmeinrichtung Schraubmittel aufweist, die zum Festlegen des Riegels durch den Riegel greifen und dabei in das Material des ersten und/oder zweiten Profilrohrs eingreifen.

Im Unterschied zu allen oben beschriebenen bekannten Verbindungsanordnungen weist die erfindungsgemäße Verbindungsanordnung eine Klemmeinrichtung auf, die nur noch aus einem einstückigen Riegel und Schraubmitteln gebildet ist. Der einstückige Riegel wird bei der erfindungsgemäßen Verbindungsanordnung mit den Schraubmitteln unmittelbar an der Außenseite des ersten und/oder zweiten Profilrohrs festgelegt, indem die Schraubmittel durch den Riegel durchgreifen und in das Material des ersten und/oder zweiten Profilrohrs eingreifen. Die erfindungsgemäße Verbindungsanordnung löst sich somit von dem Konzept, dass die Schraubmittel zwei Blöcke, mehrere Klemmbacken und einen Riegel oder eine Platte und Nutsteine zusammendrücken, um die Klemmeinrichtung an dem ersten und/oder zweiten Profilrohr zu befestigen, sondern die Schraubmittel greifen selbst in das erste und/oder zweite Profilrohr in dessen Material ein. Es hat sich herausgestellt, dass die Haltekraft der erfindungsgemäßen Verbindungsanordnung gegenüber den bekannten Verbindungsanordnungen, deren Haltekraft auf einer Flächenreibung beruht, verbessert ist, weil die Schraubmittel durch das Eingreifen in das Material des ersten und/oder zweiten Profilrohrs einen Formschluss mit diesen eingehen können, der in Längsrichtung der Profilrohre sperrend wirkt. Gegenüber der bekannten Verbindungsanordnung, deren Klemmeinrichtung Klemmbacken und einen Riegel aufweist, weist die erfindungsgemäße Verbindungsanordnung den zusätzlichen Vorteil auf, dass die Materialschwächung in dem Riegel aufgrund der bei der bekannten Verbindungsanordnung über die Breite des Riegels hindurchgehenden Bohrungen deutlich verringert ist, weil bei der erfindungsgemäßen Verbindungsanordnung die Bohrung(en) zum Durchgreifen der Schraubmittel senkrecht durch die Platte und/oder senkrecht durch die Schenkel des Riegels gehen.

Da die erfindungsgemäße Verbindungsanordnung mit weniger Teilen auskommt, ist auch der Herstellungs- und der Montageaufwand der erfindungsgemäßen Verbindungsanordnung vorteilhafterweise verringert.

Grundsätzlich ist es möglich, dass nur der erste Schenkel mit seinem freien Ende die zugeordnete Befestigungsleiste umgreift, wenn die Schraubmittel durch den zweiten Schenkel durchgreifen, wie in einer bevorzugten Ausgestaltung vorgesehen ist.

In diesem Fall ist der Riegel durch die durch den zweiten Schenkel durchgreifenden und in das Material des ersten und/oder zweiten Profilrohrs eingreifenden Schraubmittel in Zusammenwirken mit dem die andere Befestigungsleiste umgreifenden freien Ende des ersten Schenkels mit hoher Haltekraft an dem ersten und/oder zweiten Profilrohr festgelegt.

Der Vorteil dieser Maßnahme besteht außerdem darin, dass die Schraubmittel nur von einer Seite der Profilrohre her in den Riegel und in das oder die Profilrohre eingeschraubt werden müssen, wodurch der Montageaufwand sehr gering ist.

In einer weiteren bevorzugten Ausgestaltung umgreift der zweite Schenkel mit seinem freien Ende die zugeordnete Befestigungsleiste nicht, sondern überragt diese nur.

Diese Maßnahme ist insbesondere in Verbindung mit der zuvor genannten Ausgestaltung von Vorteil, wonach die Schraubmittel durch den zweiten Schenkel durchgreifen. Dadurch, dass der zweite Schenkel die zugeordnete Befestigungsleiste nicht umgreift, sondern nur überragt, wird die Montage der Klemmeinrichtung an dem ersten und/oder zweiten Profilrohr weiter vereinfacht, weil der Riegel nicht auf das zugehörige Profilrohr aufgeschoben werden muss, sondern lediglich aufgesetzt werden kann. Dies ist insbesondere bei einer geradlinigen Verbindung der zwei Profilrohre von Vorteil, da die Profilrohre zunächst mit der üblicherweise vorgesehenen Dichtungshülse zwischen den beiden Profilrohren zusammengeschoben werden können, und der Riegel kann danach die Trennstelle zwischen den beiden Profilrohren überbrückend auf diese aufgesetzt werden, wonach nur noch die Schraubmittel eingeschraubt werden müssen.

In einer weiteren bevorzugten Ausgestaltung greifen die Schraubmittel auf der der ersten bzw. zweiten Außenseite abgewandten Seite der zugeordneten Befestigungsleiste in das Material des ersten bzw. zweiten Profilrohrs ein.

Diese Maßnahme erhöht vorteilhafterweise die Haltekraft der Klemmeinrichtung zum Verbinden der zwei Profilrohre aneinander, weil die Schraubmittel bei dieser Ausgestaltung unter die Befestigungsleiste greifen und dadurch ein Abheben des Riegels von der bzw. den Außenseiten, auf denen der Riegel angeordnet ist, noch sicherer vermeidet. Die Schraubmittel dringen dabei vorzugsweise teilweise in die Befestigungsleiste und teilweise in die Wand des ersten und/oder zweiten Profilrohrs unmittelbar unterhalb der Befestigungsleiste ein.

Alternativ zu der Ausgestaltung, wonach die Schraubmittel durch den zweiten Schenkel durchgreifen, kann auch vorgesehen sein, dass die Schraubmittel durch den plattenförmigen Abschnitt durchgreifen und dabei in das Material des ersten und/oder zweiten Profilrohrs eingreifen.

In dieser Ausgestaltung verläuft die Schraubrichtung senkrecht zu der Außenseite des ersten und/oder zweiten Profilrohrs, auf der der plattenförmige Abschnitt angeordnet ist. Wenn die Schraubmittel nur durch den plattenförmigen Abschnitt und nicht durch den zweiten Schenkel hindurchgreifen, ist es bevorzugt, wenn auch der zweite Schenkel mit seinem freien Ende die ihm zugeordnete Befestigungsleiste umgreift.

Ebenso kann es gemäß einer weiteren Ausgestaltung vorgesehen sein, dass die Schraubmittel erste Schraubmittel, die durch den zweiten Schenkel durchgreifen, und zweite Schraubmittel aufweisen, die durch den plattenförmigen Abschnitt durchgreifen.

Diese Ausgestaltung ist im Hinblick auf die Haltekraft, mit der die Klemmeinrichtung das erste und das zweite Profilrohr zusammenhalten, noch weiter verbessert.

In einer weiteren bevorzugten Ausgestaltung umgreift auch der zweite Schenkel die ihm zugeordnete Befestigungsleiste, auch wenn die Schraubmittel durch den zweiten Schenkel durchgreifen, um die Haltekraft, falls erforderlich, noch weiter zu erhöhen.

In einer weiteren bevorzugten Ausgestaltung umgreift zumindest der erste Schenkel mit seinem freien Ende die zugeordnete Befestigungsleiste formschlüssig.

Hierbei ist von Vorteil, dass durch das formschlüssige Umgreifen des freien Endes des ersten Schenkels um die zugeordnete Befestigungsleiste eine flächige Anlage des freien Endes an der zugeordneten Befestigungsleiste erreicht wird, wodurch Kräfte quer zur Außenseite des ersten und/oder zweiten Profilrohrs auf den Riegel aufgenommen werden können, die andernfalls ein leichtes Abheben des Riegels von der Außenseite, auf der er angeordnet ist, im Bereich des ersten Schenkels bewirken würden. Dies gilt insbesondere dann, wenn der erste Schenkel oder der plattenförmige Abschnitt auf der Seite des ersten Schenkels nicht mittels zusätzlicher Schraubmittel an dem ersten und/oder zweiten Profilrohr festgelegt ist.

In einer weiteren bevorzugten Ausgestaltung greifen die Schraubmittel formschlüssig, insbesondere schneidend in das Material des ersten bzw. zweiten Profilrohrs ein.

Durch diese Maßnahme werden die Haltekräfte, die von den Schraubmitteln aufgebracht werden, noch weiter erhöht, weil die Schraubmittel mit dem Material des ersten bzw. zweiten Profilrohrs einen Gewindeformschluss eingehen, der vorzugsweise ein bis fünf Gewindegänge betragen kann. Es ist aber im Zusammenhang mit dieser Ausgestaltung auch ausreichend, wenn sich das vorlaufende Ende der Schraubmittel lediglich in das Material des ersten und/oder zweiten Profilrohrs eindrückt.

In einer weiteren bevorzugten Ausgestaltung weisen die Schraubmittel zumindest eine Madenschraube auf, die in eine Gewindebohrung in dem Riegel einschraubbar ist und beim Einschrauben mit ihrem vorlaufenden Ende in das Material des ersten bzw. zweiten Profilrohrs eingreift.

Die Verwendung einer Madenschraube hat den Vorteil einer Gewichtseinsparung, da Madenschrauben keinen Schraubenkopf aufweisen. Durch die Verwendung einer Madenschraube wird auch das äußere Erscheinungsbild der Verbindungsanordnung verbessert, weil sich die Madenschrauben in dem Riegel versenken lassen, ohne dass ein Schraubenkopf nach außen hervorragt.

Gemäß einer weiteren bevorzugten Ausgestaltung weisen die Schraubmittel zumindest eine Schraube mit Kopf auf, die in eine Gewindebohrung in dem Riegel einschraubbar ist und beim Einschrauben mit ihrem vorlaufenden Ende in das Material des ersten bzw. zweiten Profilrohrs eingreift, wobei der Kopf der Schraube im eingeschraubten Zustand außenseitig gegen den Riegel anliegt.

Diese Maßnahme hat ihren Vorteil hinsichtlich der Montagefreundlichkeit der erfindungsgemäßen Verbindungsanordnung, weil durch den Schraubenkopf vermieden wird, dass das vorlaufende Ende der Schraube zu weit in das Material des ersten bzw. zweiten Profilrohrs eindringt, so dass es die Wand des ersten bzw. zweiten Profilrohrs durchdringt. Letzteres ist aus Gründen der Dichtigkeit der Verbindung zweier Profilrohre in einem Fluidleitungssystem unbedingt zu vermeiden. Bei entsprechender Bemaßung der Schraubenlänge lässt sich die Kopfschraube nur so weit anziehen, dass das vorlaufende Ende der Schraube zwar in das Material des ersten bzw. zweiten Profilrohrs eingreift, jedoch nicht durch die Wand des ersten bzw. zweiten Profilrohrs durchgreift.

In einer weiteren bevorzugten Ausgestaltung greift der erste Schenkel mit seinem freien Ende in das Material des ersten bzw. zweiten Profilrohrs ein.

Diese Maßnahme dient ebenfalls der weiteren Erhöhung der Haltekraft der Verbindung der Profilrohre aneinander.

Die erfindungsgemäße Verbindungsanordnung kann zur geradlinigen Verbindung zweier Profilrohre und zur winkligen Verbindung zweier Profilrohre verwendet werden.

Im Fall, dass die Verbindungsanordnung zur geradlinigen Verbindung zweier Profilrohre verwendet wird, ist der Riegel auf der ersten Außenseite des ersten Profilrohrs und auf der zweiten Außenseite des zweiten Profilrohrs angeordnet, und die Schraubmittel sind beidseits der Trennstelle zwischen dem ersten und zweiten Profilrohr vorhanden.

Bei der geradlinigen Verbindung zweiter Profilrohre werden somit nur genau ein Riegel sowie Schraubmittel beidseits der Trennstelle zwischen dem ersten und zweiten Profilrohr benötigt, prinzipiell also nur zwei Schrauben.

Bei einer winkligen Verbindung zweier Profilrohre sind zwei Riegel vorgesehen, von denen einer auf der ersten Außenseite des ersten Profilrohrs und der andere auf der zweiten Außenseite des zweiten Profilrohrs mit Schraubmitteln wie oben beschrieben festgelegt werden, wobei ein winkliges Brückenteil an den beiden Riegeln befestigt wird, das die beiden Riegel starr miteinander verbindet.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:
- Fig. 1: eine Verbindungsanordnung zum endseitigen Verbinden zweier Profil- rohre eines Fluidleitungssystems in geradliniger Verlängerung zueinan- der in einer auseinandergezogenen, perspektivischen Darstellung der Einzelteile der Verbindungsanordnung;
- Fig. 2: einen Längsschnitt durch die Verbindungsanordnung in Fig. 1 in einem Schnitt entlang der Linie II-II in Fig. 3, wobei die Verbindungs- anordnung in Fig. 2 fertig zusammengesetzt ist;
- Fig. 3: die Verbindungsanordnung in Fig. 2 in einem Querschnitt entlang der Linie III-III in Fig. 2;
- Fig. 4: eine weitere Verbindungsanordnung zum endseitigen Verbinden zweier Profilrohre eines Fluidleitungssystems in einer winkligen Anordnung zueinander in einer auseinandergezogenen, perspektivischen Darstel- lung der Einzelteile der Verbindungsanordnung; und
- Fig. 5: eine noch weitere Verbindungsanordnung zum Anbringen eines endseitigen Anschlussstückes an ein Profilrohr in einer auseinanderge- zogenen, perspektivischen Darstellung der Einzelteile der Verbindungs- anordnung.

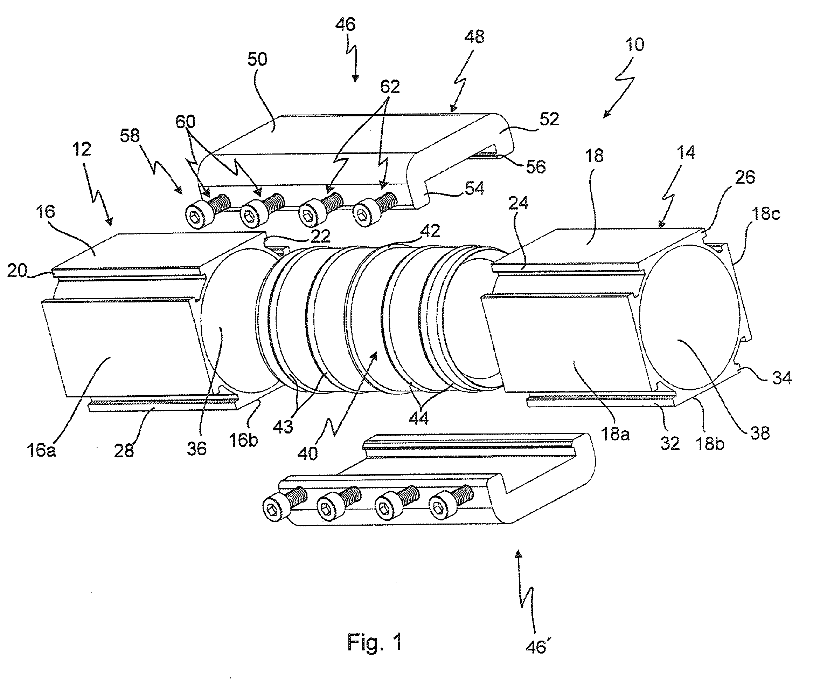

In Figuren 1 bis 3 ist eine mit dem allgemeinen Bezugszeichen 10 versehene Verbindungsanordnung zum endseitigen Verbinden zweier Profilrohre eines Fluidleitungssystems dargestellt.

Die Verbindungsanordnung 10 weist ein erstes Profilrohr 12 sowie ein zweites Profilrohr 14 auf, die miteinander zu verbinden sind. Das erste Profilrohr 12 und das zweite Profilrohr 14 sind in Figuren 1 bis 3 nur im Bereich ihrer miteinander zu verbindenden Enden dargestellt.

Das erste Profilrohr 12 und das zweite Profilrohr 14 sind als Aluminium-Strangpressprofile hergestellt und weisen außenseitig einen im Wesentlichen rechteckigen, hier quadratischen Umfang auf.

Das erste Profilrohr 12 weist eine erste Außenseite 16 auf, die in ihrer Fläche eben ist. Das zweite Profilrohr 14 weist eine der ersten Außenseite 16 entsprechende zweite Außenseite 18 auf, die in ihrer Fläche ebenfalls eben ausgebildet ist.

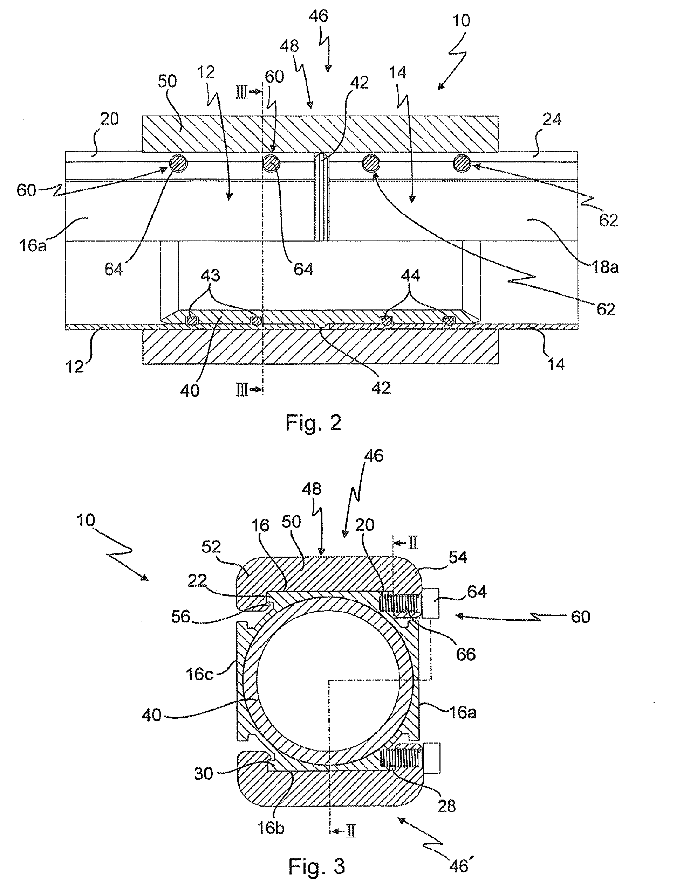

Das erste Profilrohr 12 weist drei weitere Außenseiten 16a, 16b und 16c (siehe Fig. 3) auf, wobei jeweils benachbarte der Außenseiten 16a, 16b und 16c senkrecht zueinander stehen.

Das zweite Profilrohr 14 weist in entsprechender Weise drei weitere Außenseiten 18a, 18b und 18c auf.

Die erste Außenseite 16 des ersten Profilrohrs 12 weist an ihren beiden Längsrändern jeweils eine Befestigungsleiste 20, 22 auf. Wie aus Figuren 1 und 3 hervorgeht, sind die Befestigungsleisten 20, 22 im Querschnitt quer zur Längsrichtung des ersten Profilrohrs 12 rechteckig ausgebildet. Auf der der ersten Außenseite 16 abgewandten Seite der Befestigungsleiste 20 verläuft die Befestigungsleiste 20 etwa parallel zur Außenseite 16. Das Gleiche gilt für die gegenüberliegende Befestigungsleiste 22 an der ersten Außenseite 16 des ersten Profilrohrs 12.

Die zweite Außenseite 18 des zweiten Profilrohrs 14 weist in entsprechender Weise an ihren beiden Längsrändern jeweils eine Befestigungsleiste 24, 26 auf.

Entsprechende Befestigungsleisten sind auch an den anderen Außenseiten 16a bis 16c bzw. 18a bis 18c des ersten Profilrohrs 12 und des zweiten Profilrohrs 14 vorhanden, bspw. die Befestigungsleisten 28 und 30 (siehe Fig. 3) der weiteren Außenseite 16b des ersten Profilrohrs 12 und die Befestigungsleisten 32 und 34 der weiteren Außenseite 18b des zweiten Profilrohrs 14.

Die Befestigungsleisten 20, 22, 24, 26, 28, 30, 32 und 34 verlaufen parallel zur Längsachse des ersten Profilrohrs 12 bzw. des zweiten Profilrohrs 14 und erstrecken sich vorzugsweise ohne Unterbrechung durchgehend am ersten Profilrohr 12 bzw. zweiten Profilrohr 14.

Das erste Profilrohr 12 weist weiterhin innenseitig einen im Querschnitt kreisförmigen Hohlraum 36 auf, der dem Durchtritt eines gasförmigen oder flüssigen Fluids dient, das insbesondere unter hohem Druck steht. Das zweite Profilrohr 14 weist entsprechend einen Hohlraum 38 auf, der ebenfalls im Querschnitt kreisförmig ist.

Die Verbindungsanordnung 10 weist weiterhin eine Dichthülse 40 auf. Die Dichthülse 40 dient der Abdichtung des ersten Profilrohrs 12 und des zweiten Profilrohrs 14 nach außen an der Verbindungsstelle des ersten Profilrohrs 12 mit dem zweiten Profilrohr 14, wie in Fig. 2 dargestellt ist. Die Dichthülse 40 ist bspw. ebenfalls aus Aluminium gefertigt und weist etwa mittig einen Wulst 42 auf, der unmittelbar zwischen den beiden miteinander zu verbindenden Enden des ersten Profilrohrs 12 und des zweiten Profilrohrs 14 zu liegen kommt, wenn das erste Profilrohr 12 und das zweite Profilrohr 14 zusammengefügt sind. Die Dichthülse 40 wird entsprechend hälftig in den Hohlraum 36 des ersten Profilrohrs 12 und hälftig in den Hohlraum 38 des zweiten Profilrohrs 14 eingeschoben. Am Umfang der Dichthülse 40 befinden sich mehrere Dichtungen 43 und 44, die gegen die Innenwand des ersten Profilrohrs 12 bzw. des zweiten Profilrohrs 14 dichtend anliegen, wenn das erste Profilrohr 12 mit dem zweiten Profilrohr 14 verbunden ist.

Die Verbindungsanordnung 10 weist weiterhin eine Klemmeinrichtung 46 auf, die im vorliegenden Ausführungsbeispiel auf der ersten Außenseite 16 des ersten Profilrohrs 12 und auf der zweiten Außenseite 18 des zweiten Profilrohrs 14 anordbar und mit den Befestigungsleisten 20, 22 bzw. 24, 26 in Eingriff bringbar ist.

Die Klemmeinrichtung 46 weist einen einstückigen Riegel 48 auf, wobei der Riegel 48 einen plattenförmigen Abschnitt 50 aufweist, der auf der ersten Außenseite 16 des ersten Profilrohrs 12 und der zweiten Außenseite 18 des zweiten Profilrohrs 14 angeordnet wird (vgl. Fig. 2). Der Riegel 48 weist an den Längsrändern des plattenförmigen Abschnitts 50 einen ersten Schenkel 52 und einen zweiten Schenkel 54 auf. Der erste Schenkel 52 und der zweite Schenkel 54 erstrecken sich vorzugsweise über die Länge des plattenförmigen Abschnitts 50.

Der erste Schenkel 52 und der zweite Schenkel 54 erstrecken sich im Querschnitt etwa senkrecht zu dem plattenförmigen Abschnitt 50.

Der erste Schenkel 52 ist an seinem freien Ende mit einem sich zur Längsmittelachse des Riegels 48 hin erstreckenden Vorsprung in Form einer Greifleiste 56 versehen, so dass der Riegel 48 im Bereich des ersten Schenkels 52 im Querschnitt U-förmig ausgebildet ist. Wird der Riegel 48 auf der ersten Außenseite 16 und der zweiten Außenseite 18 aufgelegt, umgreift somit der erste Schenkel 52 mit seiner Greifleiste 56 die Befestigungsleiste 22 der ersten Außenseite 16 des ersten Profilrohrs 12 und die Befestigungsleiste 26 der zweiten Außenseite 18 des zweiten Profilrohrs 14. Dabei umgreift der erste Schenkel 52 die Befestigungsleisten 22 und 26 in dem gezeigten Ausführungsbeispiel formschlüssig, d.h. der erste Schenkel 52 ist mit seiner Greifleiste 56 im Querschnitt an den rechteckigen Querschnitt der Befestigungsleiste 22 bzw. 26 angepasst. Die Greifleiste 56 erstreckt sich an dem Schenkel vorzugsweise über dessen Länge in Längsrichtung des Profilrohrs 12 bzw. 14 gesehen.

Der zweite Schenkel 54 des Riegels 48 weist demgegenüber keinen nach innen zur Längsmittelachse des Riegels 48 hin gerichteten Vorsprung auf, sondern der zweite Schenkel 54 bildet mit dem plattenförmigen Abschnitt 50 die Form eines L.

Wird der Riegel 48 auf die erste Außenseite 16 und die zweite Außenseite 18 aufgelegt, umgreift der zweite Schenkel 54 somit mit seinem freien Ende die Befestigungsleisten 20 und 24 nicht, sondern überragt diese lediglich. Hierdurch ist es möglich, den Riegel 48 auf die Außenseiten 16 und 18 aufzusetzen, das heißt der Riegel 48 muss nicht in Längsrichtung des ersten Profilrohrs 12 bzw. 14 auf diese aufgeschoben werden.

Die Klemmeinrichtung 46 weist weiterhin Schraubmittel 58 auf, die zum Festlegen des Riegels 48 an dem ersten und zweiten Profilrohr 12, 14 durch den Riegel 48 greifen und in das Material des ersten Profilrohrs 12 und des zweiten Profilrohrs 14 eingreifen.

Die Schraubmittel 58 weisen hier beidseits der Trennstelle zwischen dem ersten Profilrohr 12 und 14, die sich gemäß Fig. 2 am Wulst 42 der Dichthülse 40 befindet, jeweils zwei Schrauben 60 und 62 auf, wobei ggf. auch nur eine Schraube 60 und eine Schraube 62 ausreichen können, um den Riegel 48 an dem ersten Profilrohr 12 und dem zweiten Profilrohr 14 festzulegen.

Die Schraubmittel 58 greifen hierbei durch den zweiten Schenkel 54 des Riegels 48 hindurch und greifen im Bereich der Befestigungsleisten 20 und 24 des ersten und zweiten Profilrohrs 12, 14 in das Material des ersten Profilrohrs 12 und des zweiten Profilrohrs 14 ein, wie insbesondere aus Fig. 2 und Fig. 3 hervorgeht. Die Schrauben 60 und 62 greifen dabei auf der der ersten Außenseite 16 bzw. der zweiten Außenseite 18 abgewandten Seite der jeweils zugeordneten Befestigungsleiste 20, 24 in das Material des ersten bzw. zweiten Profilrohrs 12, 14 ein, wobei sie dabei teilweise auch in die Befestigungsleiste 20, 24 eingreifen.

Die Schrauben 60, 62 sind aus einem gegenüber Aluminium härteren Material gefertigt, bspw. aus Stahl. Die Schrauben 60, 62 weisen jeweils einen Kopf 64 und einen Gewindeschaft 66 auf (siehe Fig. 3), wobei der Gewindeschaft 66 durch eine entsprechende Bohrung in dem zweiten Schenkel 54 des Riegels 48 greift, wobei die Bohrung als Gewindebohrung ausgeführt sein kann, und das vorlaufende Ende des Gewindeschafts 66 greift formschlüssig, insbesondere schneidend in das Material des ersten Profilrohrs 12 bzw. des zweiten Profilrohrs 14 ein. Der Kopf 64 verhindert ein zu tiefes Einschrauben der Schrauben 60 bzw. 62 in das Material des ersten Profilrohrs 12 bzw. zweiten Profilrohrs 14, indem der Kopf 64 gegen die Außenseite des zweiten Schenkels 54 zu liegen kommt. Die Eindringtiefe des Gewindeschafts 66 in das Material des Profilrohrs 12 bzw. 14 kann mehrere Gewindegänge betragen.

Zum Verbinden des ersten Profilrohrs 12 mit dem zweiten Profilrohr 14 in geradliniger Verlängerung zueinander wird ausgehend von Fig. 1 zunächst die Dichthülse 40 in den Hohlraum 36 des ersten Profilrohrs 12 und in den Hohlraum 38 des zweiten Profilrohrs 14 eingesteckt und die beiden Profilrohre 12 und 14 werden so weit zusammengeschoben, bis ihre einander zugewandten Enden an dem Wulst 42 der Dichthülse 40 anliegen, wie in Fig. 2 dargestellt ist. Anschließend wird der Riegel 48 mit den ggf. in den Schenkel 54 des Riegels 48 vorgeschraubten Schrauben 60 und 62 auf die Außenseiten 16 und 18 des ersten und zweiten Profilrohrs 12, 14 aufgesetzt, und anschließend werden die Schrauben 60, 62 durch den zweiten Schenkel 54 weiter eingeschraubt, bis sie durch den zweiten Schenkel hindurch in das Material des ersten und zweiten Profilrohrs 12, 14 eingreifen.

Um das Zusammenhalten des ersten Profilrohrs 12 und des zweiten Profilrohrs 14 weiter zu verbessern, kann auf der den Außenseiten 16 und 18 gegenüberliegenden Außenseiten 16b und 18b eine zweite Klemmeinrichtung 46' montiert werden, die identisch zu der Klemmeinrichtung 46 ausgebildet ist und in entsprechender Weise an dem ersten Profilrohr 12 und dem zweiten Profilrohr 14 an den Befestigungsleisten 28, 30, 32, 34 festgelegt wird.

In einer nicht dargestellten Abwandlung der Verbindungsanordnung 10 können die Schraubmittel 58 anstatt durch den zweiten Schenkel 54 durch den plattenförmigen Abschnitt 50, vorzugsweise nahe dem ersten Schenkel 52 und dem zweiten Schenkel 54 senkrecht zu den Außenseiten 16 und 18 durch den Riegel 48 durchgreifen, die dann in das Material des ersten Profilrohrs 12 und des zweiten Profilrohrs 14 im Bereich deren Außenseiten 16 und 18 eingreifen. Wenn nur Schraubmittel vorgesehen sind, die durch den plattenförmigen Abschnitt 50 durch den Riegel 48 hindurchgreifen, ist der zweite Schenkel 54 entsprechend zu dem ersten Schenkel 52 ebenfalls mit einer Greifleiste 56 zu versehen, der die Befestigungsleisten 20 bzw. 24 des ersten und zweiten Profilrohrs 12, 14 umgreift.

Unabhängig davon kann auch bei der Verbindungsanordnung 10, bei der die Schraubmittel 58 durch den zweiten Schenkel 54 durchgreifen, vorgesehen sein, dass der zweite Schenkel 54 ebenfalls mit einer Greifleiste entsprechend der Greifleiste 56 ausgebildet ist.

Anstatt einer Ausgestaltung der Schraubmittel 58 in Form von Schrauben 60, 62 mit einem Kopf können die Schraubmittel 58 auch Madenschrauben aufweisen, wobei bei der Verwendung von Madenschrauben darauf zu achten ist, dass die Madenschrauben beim Einschrauben durch den Riegel 48 das Material des ersten bzw. zweiten Profilrohrs 12, 14 nicht durchdringen.

In einer weiteren Abwandlung kann vorgesehen sein, dass der erste Schenkel 52, bspw. an der Greifleiste 56, Vorsprünge, bspw. in Form von Zähnen oder dergleichen aufweist, die beim Festlegen des Riegels 48 in das Material des ersten und/oder zweiten Profilrohrs 12, 14, insbesondere in die Befestigungsleisten 22, 26 des ersten und zweiten Profilrohrs 12, 14 eingreifen.

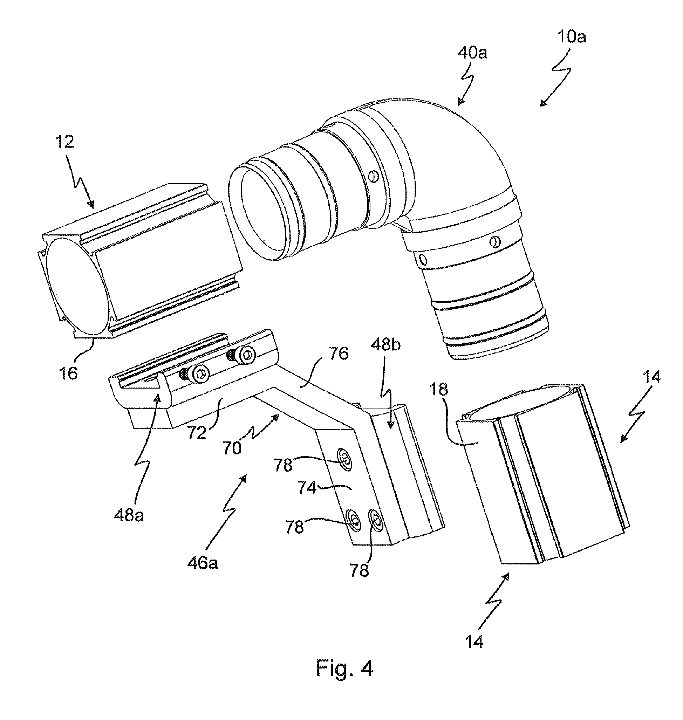

Während in Figuren 1 bis 3 die Verbindungsanordnung 10 zum endseitigen Verbinden der Profilrohre 12 und 14 in geradliniger Verlängerung zueinander ausgelegt ist, ist in Fig. 4 eine Verbindungsanordnung 10a dargestellt, die für die winklige, insbesondere rechtwinklige, endseitige Verbindung der beiden Profilrohre 12, 14 ausgelegt ist.

In diesem Fall ist eine Dichthülse 40a vorgesehen, die in Form eine Kniestücks ausgebildet ist und deren eines Ende in das erste Profilrohr 12 und deren anderes Ende in das Profilrohr 14 eingesteckt wird.

Die Verbindungsanordnung 10a weist eine Klemmeinrichtung 46a auf, die nunmehr zwei Riegel 48a und 48b aufweist.

Die Ausgestaltung der Riegel 48a und 48b ist bis auf nachfolgend zu beschreibende Unterschiede identisch mit der Ausgestaltung des Riegels 48 in den Ausführungsbeispielen gemäß Figuren 1 bis 3.

Bei dieser Verbindungsanordnung 10a wird der Riegel 48a ausschließlich an dem ersten Profilrohr 12 festgelegt, und der Riegel 48b ausschließlich an dem zweiten Profilrohr 14, wobei das Festlegen identisch zu dem Festlegen des Riegels 48 in Figuren 1 bis 3 erfolgt.

Die Klemmeinrichtung 46a weist zusätzlich zu den Riegeln 48a und 48b eine Brücke 70 auf, die zwei plattenförmige Abschnitte 72 und 74 und zwischen diesen beiden einen weiteren plattenförmigen Abschnitt 76 aufweist, wobei die plattenförmigen Abschnitte 72, 74 und 76 einstückig miteinander verbunden sind.

Die Brücke 70 wird über den plattenförmigen Abschnitt 72 außenseitig auf dem Riegel 48a und über dem plattenförmigen Abschnitt 74 auf dem Riegel 48b befestigt. Für den plattenförmigen Abschnitt 74 sind in Fig. 4 hierzu drei Schrauben 78 dargestellt.

Die Riegel 48a und 48b gemäß Fig. 4 sind in ihrer Längsrichtung kürzer ausgebildet als der Riegel 48, bspw. etwa halb so lang.

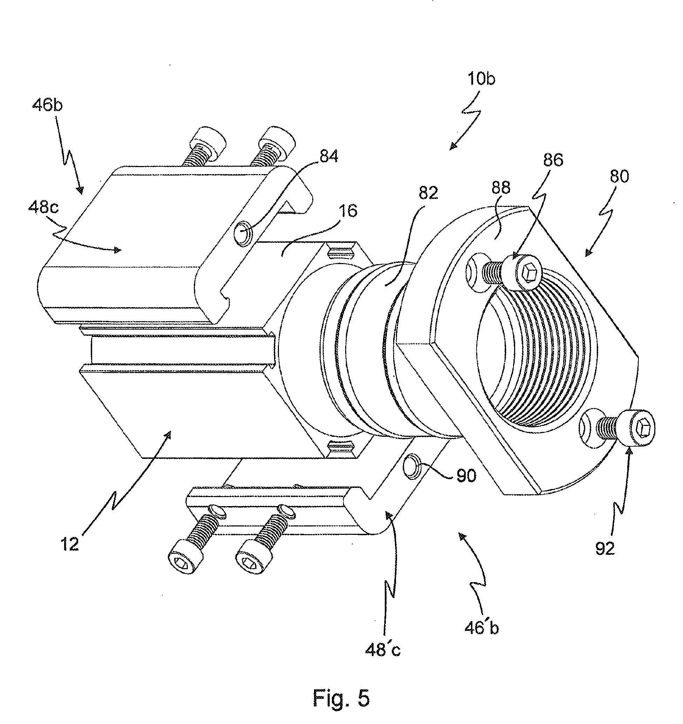

In Fig. 5 ist eine weitere Verbindungsanordnung 10b dargestellt, die zum Verbinden eines Anschlussstücks 80 mit bspw. dem ersten Profilrohr 12 ausgelegt ist.

Die Verbindungsanordnung 10b weist eine Klemmeinrichtung 46b auf, die einen Riegel 48c aufweist, der bis auf die nachfolgend zu beschreibenden Unterschiede mit der Ausgestaltung des Riegels 48 in Figuren 1 bis 3 identisch ist.

Der Riegel 48c wird in gleicher Weise wie der Riegel 48 an der Außenseite 16 des ersten Profilrohrs 12 festgelegt. Die Länge des Riegels 48c in Längsrichtung des Profilrohrs 12 kann dabei kürzer als die Länge des Riegels 48 in Figuren 1 bis 3 gewählt werden, da der Riegel 48c keine Trennstelle zwischen zwei Profilrohren überbrücken muss.

Das Anschlussstück 80, das bspw. zum Anschließen einer Fluidleitung zu einem Arbeitsplatz dient, weist eine Dichthülse 82 auf, die in das erste Profilrohr 12 eingeschoben wird. An einer dem Anschlussstück 80 zugewandten Stirnseite weist der Riegel 48c eine Gewindebohrung 84 auf, in die eine Schraube 86, die durch einen Flansch 88 des Anschlussstücks 80 durchgreift, eingeschraubt wird, wodurch der Flansch 88 an dem Riegel 48c festgelegt wird.

Eine weitere Klemmeinrichtung 46'b mit einem Riegel 48'c wird an der der Außenseite 16 gegenüberliegenden Außenseite des ersten Profilrohrs 12 in gleicher Weise wie für die Klemmeinrichtung 46b beschrieben festgelegt. Der Riegel 48'c weist stirnseitig eine weitere Gewindebohrung 90 auf, in die eine weitere Schraube 92 zum Festlegen des Flansches 88 an dem Riegel 48'c eingeschraubt wird.

Es versteht sich, dass mit der Klemmeinrichtung 46 im Sinne eines modulartigen Aufbaus auch ein seitlicher Ausgang aus einem Profilrohr mit einer Anschlussmuffe realisiert werden kann, bspw. ein seitlicher Ausgang durch die Außenseite 16 des ersten Profilrohrs 12 hindurch. In diesem Fall kann der Riegel 48 in seinem plattenförmigen Abschnitt 50 eine Öffnung aufweisen, an der ein Anschluss angeordnet ist. Das Prinzip der Festlegung dieses Riegels ist dann das Gleiche wie in den vorherigen Ausführungsbeispielen.

## Patentansprüche

1. Verbindungsanordnung zum endseitigen Verbinden zweier Profilrohre eines Fluidleitungssystems oder zum Anbringen eines Anschlussstücks an ein Profilrohr, mit einem ersten Profilrohr (12) und mit einem zweiten Profilrohr (14), wobei das erste Profilrohr (12) eine erste Außenseite (16) und das zweite Profilrohr (14) eine zweite Außenseite (18) aufweist, wobei die erste Außenseite (16) und die zweite Außenseite (18) jeweils an beiden Längsrändern eine Befestigungsleiste (20, 22, 24, 26) aufweisen, und mit einer Klemmeinrichtung (46; 46'; 46a; 46b, 46'b), die auf der ersten und/oder zweiten Außenseite (16, 18) anordbar und mit den Befestigungsleisten (20, 22, 24, 26) in Eingriff bringbar ist, **dadurch gekennzeichnet, dass** die Klemmeinrichtung (46; 46'; 46a; 46b, 46'b) einen einstückigen Riegel (48; 48a, 48b; 48c; 48'c) aufweist, der einen auf der ersten und/oder zweiten Außenseite (16, 18) anzuordnenden plattenförmigen Abschnitt (50) und etwa senkrecht zu diesem an seiner einen Längsseite einen ersten Schenkel (52) und an seiner gegenüberliegenden Längsseite einen zweiten Schenkel (54) aufweist, dass im auf der ersten und/oder zweiten Außenseite (16, 18) angeordneten Zustand des Riegels (48; 48a, 48b; 48c; 48'c) zumindest der erste Schenkel (52) mit seinem freien Ende die zugeordnete Befestigungsleiste (22, 26) umgreift, und dass die Klemmeinrichtung (46; 46'; 46a; 46b, 46'b) Schraubmittel (58) aufweist, die zum Festlegen des Riegels (48; 48a, 48b; 48c; 48'c) durch den Riegel (48; 48a, 48b; 48c; 48'c) greifen und dabei in das Material des ersten und/oder zweiten Profilrohrs (12, 14) eingreifen.

2. Verbindungsanordnung nach Anspruch 1, **dadurch gekennzeichnet, dass** die Schraubmittel (58) durch den zweiten Schenkel (54) durchgreifen.

3. Verbindungsanordnung nach Anspruch 1 oder 2, **dadurch gekennzeichnet, dass** der zweite Schenkel (54) mit seinem freien Ende die zugeordnete Befestigungsleiste (20, 24) nicht umgreift, sondern nur überragt.

4. Verbindungsanordnung nach einem der Ansprüche 1 bis 3, **dadurch gekennzeichnet, dass** die Schraubmittel (58) auf der der ersten bzw. zweiten Außenseite (16, 18) abgewandten Seite der zugeordneten Befestigungsleiste (20, 24) in das Material des ersten bzw. zweiten Profilrohrs (12, 14) eingreifen.

5. Verbindungsanordnung nach Anspruch 1, **dadurch gekennzeichnet, dass** die Schraubmittel (58) durch die Platte (50) durchgreifen.

6. Verbindungsanordnung nach einem der Ansprüche 1 bis 5, **dadurch gekennzeichnet, dass** die Schraubmittel (58) erste Schraubmittel, die durch den zweiten Schenkel (54) durchgreifen, und zweite Schraubmittel aufweisen, die durch die Platte(50) durchgreifen.

7. Verbindungsanordnung nach einem der Ansprüche 1 bis 6, **dadurch gekennzeichnet, dass** der zweite Schenkel (54) die ihm zugeordnete Befestigungsleiste (20, 24) umgreift.

8. Verbindungsanordnung nach Anspruch 1 bis 7, **dadurch gekennzeichnet, dass** zumindest der erste Schenkel (52) mit seinem freien Ende die zugeordnete Befestigungsleiste (22, 26) formschlüssig umgreift.

9. Verbindungsanordnung nach einem der Ansprüche 1 bis 8, **dadurch gekennzeichnet, dass** die Schraubmittel (58) formschlüssig, insbesondere schneidend in das Material des ersten bzw. zweiten Profilrohrs (12, 14) eingreifen.

10. Verbindungsanordnung nach einem der Ansprüche 1 bis 9, **dadurch gekennzeichnet, dass** die Schraubmittel (58) zumindest eine Madenschraube aufweisen, die in eine Gewindebohrung in dem Riegel (48; 48a, 48b; 48c; 48'c) einschraubbar ist und beim Einschrauben mit ihrem vorlaufenden Ende in das Material des ersten bzw. zweiten Profilrohrs (12, 14) eingreift.

11. Verbindungsanordnung nach einem der Ansprüche 1 bis 10, **dadurch gekennzeichnet, dass** die Schraubmittel (58) zumindest eine Schraube (60) mit Kopf (64) aufweisen, die in eine Gewindebohrung in dem Riegel (48; 48a, 48b; 48c; 48'c) einschraubbar ist und beim Einschrauben mit ihrem vorlaufenden Ende in das Material des ersten bzw. zweiten Profilrohrs (12, 14) eingreift, wobei der Kopf (64) der Schraube im eingeschraubten Zustand außenseitig gegen den Riegel (48; 48a, 48b; 48c; 48'c) anliegt.

12. Verbindungsanordnung nach einem der Ansprüche 1 bis 11, **dadurch gekennzeichnet, dass** der erste Schenkel (52) mit seinem freien Ende in das Material des ersten bzw. zweiten Profilrohrs (12, 14) eingreift.

13. Verbindungsanordnung nach einem der Ansprüche 1 bis 12, **dadurch gekennzeichnet, dass** der Riegel (48) zur geradlinigen Verbindung des ersten und des zweiten Profilrohrs (12, 14) auf der ersten und zweiten Außenseite (16, 18) angeordnet ist, und die Schraubmittel (58) beidseits der Trennstelle zwischen dem ersten und zweiten Profilrohr (12, 14) vorhanden sind.

14. Verbindungsanordnung nach einem der Ansprüche 1 bis 12, **dadurch gekennzeichnet, dass** die Klemmeinrichtung (46a) zwei Riegel (48a, 48b) aufweist, von denen einer auf der ersten Außenseite (16) des ersten Profilrohrs (12) und der andere auf der zweiten Außenseite (18) des zweiten Profilrohrs (14) anzuordnen ist, wobei ein winkeliges Brückenteil (70) an den beiden Riegeln (48a, 48b) befestigt ist, das die beiden Riegel (48a, 48b) starr miteinander verbindet.

## Claims

1. A connecting arrangement for connecting two profiled tubes of a fluid-line system or for mounting a connector piece to a profiled tube, comprising a first profiled tube (12) and a second profiled tube (14), wherein the first profiled tube (12) has a first outer side (16) and the second profiled tube (14) has a second outer side (18), wherein the first outer side (16) and the second outer side (18) have an attachment rail (20, 22, 24, 26) at both longitudinal edges in each case, and a clamping device (46; 46'; 46a; 46b, 46'b), which can be arranged on the first and/or second outer side (16, 18) and can engage the attachment rails (20, 22, 24, 26), **characterized in that** the clamping device (46; 46'; 46a; 46b, 46'b) has a bar (48; 48a, 48b; 48c; 48'c) of one-piece design, which has a plate-shaped portion (50) to be arranged on the first and/or second outer side (16, 18), and a first leg (52) on a longitudinal side of said bar which is approximately perpendicular to the plate-shaped portion (50), and a second leg (54) on an opposite longitudinal side of said bar, that, when the bar (48; 48a, 48b; 48c; 48'c) is arranged on the first and/or second outer side (16, 18), at least the first leg (52) engages with its free end around the attachment rail (22, 26) assigned thereto, and that the clamping device (46; 46'; 46a; 46b, 46'b) has screwing means (58) which engage through the bar (48; 48a, 48b; 48c; 48'c) for affixing the bar (48; 48a; 48b; 48c; 48'c) and, thereupon, engage into the material of the first and/or second profiled tube (12, 14).

2. The connecting arrangement of claim 1, **characterized in that** the screwing means (58) engage through the second leg (54).

3. The connecting arrangement of claim 1 or 2, **characterized in that** the second leg (54) does not engage with its free end the attachment rail (20, 24) assigned thereto, but lies over same only.

4. The connecting arrangement of anyone of claims 1 through 3, **characterized in that** the screwing means (58) engage into the material of the first or second profiled tube (12, 14) on the side of the attachment rail (20, 24) which faces away from the first or second outer side (16, 18).

5. The connecting arrangement of claim 1, **characterized in that** the screwing means (58) engage through the plate (50).

6. The connecting arrangement of anyone of claims 1 through 5, **characterized in that** the screwing means (58) have first screwing means which engage through the second leg (54), and second screwing means which engage through the plate (50).

7. The connecting arrangement of anyone of claims 1 through 6, **characterized in that** the second leg (54) engages around the attachment rail (20, 24) assigned thereto.

8. The connecting arrangement of claim 1 through 7, **characterized in that** at least the first leg (52) engages with its free end around the attachment rail (22, 26) assigned thereto in a form-fitting manner.

9. The connecting arrangement of anyone of claims 1 through 8, **characterized in that** the screwing means (58) engage into the material of the first or second profiled tube (12, 14) in a form-fitting manner, in particular in a cutting manner.

10. The connecting arrangement of anyone of claims 1 through 9, **characterized in that** the screwing means (58) have at least one headless screw, which can be screwed into a threaded bore in the bar (48; 48a, 48b; 48c; 48'c), and which engages with its leading end into the material of the first or second profiled tube (12, 14) upon being screwed in.

11. The connecting arrangement of anyone of claims 1 through 10, **characterized in that** the screwing means (58) have at least one screw (60) with a head (64), which can be screwed into a threaded bore in the bar (48; 48a, 48b; 48c; 48'c), and which engages with its leading end into the material of the first or second profiled tube (12, 14) upon being screwed in, wherein the head (64) of the screw abuts on the outer side against the bar (48; 48a, 48b; 48c; 48'c) when screwed in.

12. The connecting arrangement of anyone of claims 1 through 11, **characterized in that** the first leg (52) engages with its free end into the material of the first or second profiled tube (12, 14).

13. The connecting arrangement of anyone of claims 1 through 12, **characterized in that** the bar (48) is arranged on the first and second outer sides (16, 18) for a rectilinear connection of the first and the second profiled tube (12, 14), and the screwing means (58) are present on both sides of the interface between the first and the second profiled tube (12, 14).

14. The connecting arrangement of anyone of claims 1 through 12, **characterized in that** the clamping device (46a) has two bars (48a, 48b), one of which is to be arranged on the first outer side (16) of the first profiled tube (12) and the other is to be arranged on the second outer side (18) of the second profiled tube (14), wherein an angled bridge piece (70) is attached at both bars (48a, 48b), which connects the two bars (48a, 48b) with one another in a rigid manner.

## Revendications

1. Dispositif de raccordement pour le raccordement côté extrémité de deux tubes profilés d'un système de conduite fluidique ou pour le montage d'une pièce de raccordement sur un tube profilé, avec un premier tube profilé (12) et un second tube profilé (14), le premier tube profilé (12) présentant un premier côté extérieur (16) et le second tube profilé (14) présentant un second côté extérieur (18), le premier côté extérieur (16) et le second côté extérieur (18) présentant chacun une baguette de fixation (20, 22, 24, 26) sur les deux bords longitudinaux, et avec un dispositif de bridage (46 ; 46' ; 46a ; 46b, 46'b) qui peut être agencé sur le premier et/ou le second côté extérieur (16, 18) et amené en engagement avec les baguettes de fixation (20, 22, 24, 26), **caractérisé en ce que** le dispositif de bridage (46 ; 46' ; 46a ; 46b, 46'b) présente un verrou d'un seul tenant (48 ; 48a, 48b ; 48c ; 48'c) qui comporte une section (50) en forme de plaque à agencer sur le premier et/ou le second côté extérieur (16, 18) et à peu près perpendiculairement à celle-ci sur un de ses côtés longitudinaux, une première branche (52) et sur son côté longitudinal opposé une seconde branche (54), **en ce que** dans l'état du verrou (48 ; 48a, 48b ; 48c ; 48'c) disposé sur le premier et/ou le second côté extérieur (16, 18), l'extrémité libre au moins de la première branche (52) entoure la baguette de fixation associée (22, 26) et **en ce que** le dispositif de serrage (46 ; 46' ; 46a ; 46b, 46'b) présente des moyens de vissage (58) qui traversent le verrou (48 ; 48a, 48b ; 48c ; 48'c) pour sa fixation et s'engagent dans le matériau du premier et/ou du second tube profilé (12, 14).

2. Dispositif de raccordement selon la revendication 1, **caractérisé en ce que** les moyens de vissage (58) traversent la seconde branche (54).

3. Dispositif de raccordement selon la revendication 1 ou 2, **caractérisé en ce que** l'extrémité libre de la seconde branche (54) n'entoure pas la baguette de fixation associée (20, 24) mais la surplombe seulement.

4. Dispositif de raccordement selon l'une quelconque des revendications 1 à 3, **caractérisé en ce que** les moyens de vissage (58) s'engagent sur le côté éloigné du premier ou du second côté extérieur (16, 18) de la baguette de fixation associée (20, 24) dans le matériau du premier ou du second tube profilé (12, 14).

5. Dispositif de raccordement selon la revendication 1, **caractérisé en ce que** les moyens de vissage (58) traversent la plaque (50).

6. Dispositif de raccordement selon l'une quelconque des revendications 1 à 5, **caractérisé en ce que** les moyens de vissage (58) présentent des premiers moyens de vissage qui traversent la seconde branche (54) et des seconds moyens de vissage qui traversent la plaque (50).

7. Dispositif de raccordement selon l'une quelconque des revendications 1 à 6, **caractérisé en ce que** la seconde branche (54) entoure la baguette de fixation (20, 24) qui lui est associée.

8. Dispositif de raccordement selon les revendications 1 à 7, **caractérisé en ce que** l'extrémité libre au moins de la première branche (52) entoure la baguette de fixation associée (22, 26) par complémentarité de forme.

9. Dispositif de raccordement selon l'une quelconque des revendications 1 à 8, **caractérisé en ce que** les moyens de vissage (58) s'engagent par complémentarité de forme, en particulier de manière à couper dans le matériau du premier ou du second tube profilé (12, 14).

10. Dispositif de raccordement selon l'une quelconque des revendications 1 à 9, **caractérisé en ce que** les moyens de vissage (58) présentent au moins une vis sans tête qui peut être vissée dans un perçage fileté du verrou (48 ; 48a, 48b ; 48c ; 48'c) et s'engage lors du vissage par son extrémité avant dans le matériau du premier ou du second tube profilé (12, 14).

11. Dispositif de raccordement selon l'une quelconque des revendications 1 à 10, **caractérisé en ce que** les moyens de vissage (58) présentent au moins une vis (60) avec une tête (64) qui peut être vissée dans un perçage fileté du verrou (48 ; 48a, 48b ; 48c ; 48'c) et s'engage lors du vissage par son extrémité avant dans le matériau du premier ou du second tube profilé (12, 14), la tête (64) de la vis reposant à l'état vissé côté extérieur contre le verrou (48 ; 48a, 48b ; 48c ; 48'c).

12. Dispositif de raccordement selon l'une quelconque des revendications 1 à 11, **caractérisé en ce que** l'extrémité libre de la première branche (52) s'engage dans le matériau du premier ou du second tube profilé (12, 14).

13. Dispositif de raccordement selon l'une quelconque des revendications 1 à 12, **caractérisé en ce que** le verrou (48) est disposé sur le premier et le second côté extérieur (16, 18) pour la liaison rectiligne du premier et du second tube profilé (12, 14) et **en ce que** les moyens de vissage (58) sont présents de part et d'autre du point de séparation entre le premier et le second tube profilé (12, 14).

14. Dispositif de raccordement selon l'une quelconque des revendications 1 à 12, **caractérisé en ce que** le dispositif de bridage (46a) présente deux verrous (48a, 48b), dont l'un est à agencer sur le premier côté extérieur (16) du premier tube profilé (12) et l'autre sur le second côté extérieur (18) du second tube profilé (14), une partie de pont angulaire (70) étant fixée sur les deux verrous (48a, 48b), laquelle relie rigidement les deux verrous (48a, 48b) l'un à l'autre.
